# FASCICULE DE BREVET EUROPEEN

(11) **EP 3 589 969 B1**
(45) Date de publication et mention de la délivrance du brevet: **02.09.2026**
(21) Numéro de dépôt: 18706754.1
(22) Date de dépôt: 27.02.2018
(51) Int. Cl.: G01S 5/02

(54) **PROCÉDÉ D'ESTIMATION DE LA LOCALISATION D'UN ÉQUIPEMENT, MODULE, ÉQUIPEMENT, PRODUIT PROGRAMME D'ORDINATEUR ET MEDIUM DE STOCKAGE CORRESPONDANTS**
VERFAHREN ZUR SCHÄTZUNG DES STANDORTS EINER VORRICHTUNG UND ZUGEHÖRIGES MODUL, VORRICHTUNG, COMPUTERPROGRAMMPRODUKT UND SPEICHERMEDIUM
METHOD FOR ESTIMATING THE LOCATION OF A DEVICE, AND CORRESPONDING MODULE, DEVICE, COMPUTER PROGRAM PRODUCT AND STORAGE MEDIUM

(30) Priorité: 02.03.2017 FR 1751723
(43) Date de publication de la demande: 08.01.2020
(73) Titulaire: Banks and Acquirers International Holding, 75015 Paris (FR)
(72) Inventeur: BEUNARDEAU, Marc, 75015 Paris (FR); CONNOLLY, Aisling, 75005 Paris (FR); GERAUD, Rémi, 75018 Paris (FR)
(74) Mandataire: Germain Maureau
(86) Numéro de dépôt international: PCT/EP2018/054734
(87) Numéro de publication internationale: WO 2018/158213

(56) Documents cités:
- US-A1- 2014 171 098
- US-A1- 2016 131 750

## Description

### 1 DOMAINE TECHNIQUE

Le domaine de l'invention est celui de la localisation d'équipements, basée notamment sur des données fournies par un ou plusieurs capteurs porté(s) par un tel équipement.

Plus précisément, l'invention concerne une technique d'optimisation d'une telle localisation.

### 2 ARRIERE-PLAN TECHNOLOGIQUE

La localisation, ou le positionnement, d'un équipement électronique consiste à trouver sa position dans un environnement connu, par exemple sur une carte. Ce but est classiquement atteint en combinant des informations de mesures locales (issues par exemple de capteurs) et des données initiales (par exemple une carte avec des points de référence). Dans un scénario typique utilisant des données GPS (ou des balises de type Beacon), un équipement mesure le décalage d'un signal de référence (par exemple transmis par un satellite géostationnaire) pour estimer la distance à la source du signal ; en utilisant quatre sources ou plus, il est possible de déterminer la position précise de l'équipement.

Les solutions existantes présentent cependant certains inconvénients ou limitations, tels que :
- certaines solutions ne se basent que sur un seul capteur ;
- certaines solutions échouent si les données du capteur sont incomplètes et/ou bruitées ;
- certaines solutions ne peuvent pas gérer une situation où plusieurs capteurs sont en contradiction et/ou les capteurs sont différents d'un équipement à un autre et/ou différents capteurs sont utilisés au cours du temps.

Les capteurs eux-mêmes peuvent être affectés par la présence d'obstacles, de dysfonctionnement temporaire, d'interférence, de bruit, de défaut et/ou de collision.

Enfin, ces sources de données de localisation peuvent se révéler peu fiables (potentiellement sous le contrôle d'un tiers malintentionné) ou non disponibles.

On connaît le document US 2014/171098 A1 qui concerne une technique de localisation d'un dispositif mobile dans un lieu. On connaît également le document US 2016/131750 A1 qui concerne l'estimation en temps réel de la distance entre deux nœuds communiquant entre eux dans un système de communication sans fil. Ces techniques manquent de fiabilité.

Il existe donc un besoin pour une technique de localisation d'un équipement électronique offrant une fiabilité plus élevée que les techniques actuellement utilisées tout en ayant un coût maîtrisé.

Il existe également un besoin pour qu'une telle technique de localisation optimise la précision de localisation, par rapport aux techniques actuelles.

Il existe enfin un besoin pour qu'une telle technique de localisation permette d'identifier les sources de données non fiables.

### 3 RESUME

L'invention propose donc un procédé d'estimation d'une localisation courante *Lᵢ* d'au moins un équipement *Equip* associé à une pluralité de capteurs *Capt^{I},* dans un environnement connu, ledit procédé étant caractérisé en ce qu'il est mis en œuvre dans au moins un module d'estimation compris ou rattaché audit au moins un équipement et en ce qu'il comprend au moins une itération *i* des étapes suivantes:
- pour au moins deux capteurs de ladite pluralité de capteurs :
   - obtention d'une donnée ${s}_{i}^{I}$ dudit au moins un capteur *Capt^{I},* à ladite localisation courante à estimer *Lᵢ* ;
   - détermination d'une prédiction ${p}_{j}^{I}$ d'une donnée de capteur pour chacune des *N* localisations candidates *Cⱼ, j=1* à *N*>1, préalablement sélectionnées par l'équipement *Equip,* ladite détermination tenant compte dudit environnement connu et d'un déplacement *mvᵢ* préalablement déterminé dudit équipement *Equip* à partir d'une localisation précédente *Lᵢ₋₁* ;
   - calcul d'une similarité ${S}_{j}^{I}$ entre ladite donnée de capteur ${s}_{i}^{I}$ et ladite prédiction ${p}_{j}^{I}$ pour chacune des *N* localisations candidates *Cⱼ, j=*1 *à N>*1 ;
- puis :
   - attribution d'une pondération à au moins un capteur de ladite pluralité de capteurs, ladite pondération tenant compte du rang de similarité dudit au moins un capteur parmi les mesures de similarité de ladite pluralité de capteurs ;
   - sélection des *m* meilleures localisations candidates *Cⱼ* résultant dudit calcul de similarité pour estimer ladite localisation courante *Lᵢ, m<N,* ladite sélection tenant compte des *m^{I}* meilleures localisations candidates ${C}_{j}^{I}$ en fonction de ladite pondération pour lesdits au moins deux capteurs de ladite pluralité de capteurs, *m^{I}*<*N*, les *m* meilleures localisations candidates *Cⱼ* sélectionnées étant destinées à être utilisées à l'étape de détermination d'une itération suivante.

Ainsi, l'invention propose une solution nouvelle et inventive de l'estimation de la localisation d'un équipement associé à au moins un capteur, basée sur des hypothèses initiales concernant la position possible de l'équipement, appelées localisations candidates, et sur une hypothèse de déplacement de l'équipement (dans une direction donnée et pour une distance donnée), de manière à affiner itérativement les localisations candidates pour obtenir la localisation recherchée. L'hypothèse de déplacement peut être déterminée de manière aléatoire et différente pour chaque itération du procédé d'estimation. En effet, cette hypothèse de mouvement de l'équipement permet de déterminer des prédictions sur les localisations candidates (préalablement sélectionnées), grâce à la connaissance de l'environnement qui permet de déterminer les données qui pourraient être fournies par un capteur à des localisations précises dans cet environnement connu.

Ensuite, le procédé de l'invention est basé sur un calcul de similarité entre une donnée de capteur réelle et une prédiction d'une donnée de capteur, pour une localisation candidate, de façon à attribuer un score de fiabilité à une prédiction de localisation (et par là même, en quelque sorte, de façon à calculer la fiabilité du capteur). Il s'agit ici de mettre en œuvre une mesure de similarité dans le cas où des capteurs de types différents sont utilisés. Par exemple, la prédiction déterminée pour une localisation candidate peut consister en une donnée de capteur d'un premier type, différent du deuxième type de capteur associé à l'équipement. Il est nécessaire dans ce cas de pouvoir déterminer si les données issues de deux capteurs différents sont comparables ou non, grâce à un calcul de similarité prédéterminé. Ainsi, la connaissance de l'environnement de localisation permet non seulement de déterminer les données qui pourraient être fournies par des capteurs dans cet environnement mais également de déterminer des mesures de similarité pouvant être utilisées dans le procédé d'estimation de localisation, en fonction de la présence de différents capteurs.

Finalement, les *m* meilleures probabilités de localisation (parmi les localisations candidates données) issues du calcul de similarité sont utilisées pour estimer la localisation courante ou affiner l'estimation de la localisation courante de l'équipement.

Ces calculs de prédictions et de similarité sont effectués à nouveau, de manière itérative, de façon à se rapprocher de plus en plus de la localisation exacte de l'équipement.

Selon une caractéristique particulière, le procédé comprend une phase d'initialisation préalable, comprenant les étapes suivantes :
- obtention d'une donnée ${s}_{init}^{I}$ dudit au moins un capteur *Capt^{I}* ;
- sélection de *Nᵢₙᵢₜ* localisations candidates *C₁* à *C_{Ninit}* ;
- détermination d'un déplacement *mvᵢₙᵢₜ* dudit équipement *Equip.*

Ainsi, selon ce mode de réalisation, le procédé d'estimation de localisation comprend une phase d'initialisation préalable aux itérations décrites ci-dessus, permettant notamment :
- d'obtenir une première donnée issue du ou des capteurs associé(s) à l'équipement, à la localisation initiale (non connue) de l'équipement ;
- de sélectionner un nombre N de localisations candidates qui serviront à estimer la localisation courante. Par exemple, ces localisations candidates correspondent à des positions de l'environnement pour lesquelles une donnée de capteur peut être prédite et serait plus ou moins similaire (suite à un calcul de similarité) à celle obtenue à la localisation initiale. Sinon, ces localisations candidates correspondent à des positions de l'environnement choisies aléatoirement, pour lesquelles une donnée de capteur peut être prédite ;
- de déterminer, par exemple de manière aléatoire, l'hypothèse de déplacement à prendre en considération dans l'étape suivante de détermination des prédictions pour chaque localisation candidate. Cette hypothèse de déplacement aléatoire peut être la même pour les itérations suivantes du procédé ou bien être différente, donc mise à jour à chaque nouvelle itération.

Cette phase d'initialisation permet d'obtenir une sélection de localisations candidates pour estimer la localisation courante, au lieu de simplement tenir compte de la donnée de capteur, comme c'est le cas dans certaines techniques de l'art antérieur.

Par exemple, la sélection des localisations candidates est mise en œuvre de manière aléatoire ou tient compte de la donnée ${s}_{init}^{I}$*.*

Ainsi, selon une première variante de réalisation, les localisations candidates peuvent être sélectionnées de manière aléatoire, par exemple en choisissant un nombre prédéterminé de localisations sur la carte de l'environnement connu, de manière aléatoire.

Selon une deuxième variante de réalisation, les localisations candidates peuvent être sélectionnées en tenant compte de la donnée de capteur obtenue au moment de l'initialisation du procédé. Par exemple, les localisations candidates sont sélectionnées parmi les localisations de la carte de l'environnement connu présentant une valeur similaire ou proche de la donnée de capteur initiale. Ainsi, si le capteur est un capteur d'altitude ou de température, plusieurs positions sur la carte d'altitude ou la carte de température peuvent fournir la même valeur que celle effectivement fournie par le capteur à l'initialisation du procédé.

Selon un aspect particulier de l'invention, prédiction ${p}_{j}^{I}$ tient compte d'une donnée ${s}_{i - 1}^{I}$ dudit au moins un capteur *Capt^{I},* à ladite localisation précédente *L*_{*i*-*1*}.

Ainsi, selon ce mode de réalisation, la prédiction déterminée pour une localisation candidate peut tenir compte d'une donnée du capteur associé à l'équipement, à une localisation précédente, de façon à pouvoir tenir compte par exemple d'un écart détecté entre la donnée reçue du capteur et la donnée prévue via la connaissance de l'environnement.

Par exemple, si l'équipement détecte un écart entre une valeur de capteur, par exemple une mesure d'altitude, et une valeur donnée par l'environnement, par exemple une carte altimétrique, cet écart peut être utilisé dans le calcul des prédictions pour qu'elles soient plus réalistes, c'est-à-dire pour qu'elles tiennent compte d'éventuelles incertitudes liées à la précision du capteur, son étalonnage... Ce mode de réalisation permet donc de « corriger » les données de l'environnement connu.

Comme expliqué précédemment, l'équipement *Equip* est associé à une pluralité de capteurs *Capt^{I}* et les étapes d'obtention d'une donnée de capteur, de détermination d'une prédiction et de calcul d'une similarité sont mises en œuvre pour au moins deux capteurs de la pluralité de capteurs. Par ailleurs, l'étape de sélection tient compte des *m^{I}* meilleures localisations candidates ${C}_{j}^{I}$ en fonction de ladite pondération pour lesdits au moins deux capteurs de ladite pluralité de capteurs, *m^{I}*<*N*.

Ainsi, si l'équipement à localiser est associé à plusieurs capteurs, même de types différents, le procédé d'estimation de localisation peut utiliser les données de ces différents capteurs, pour améliorer l'estimation de la localisation de l'équipement.

Pour ce faire, le procédé utilise une donnée pour chaque capteur considéré ainsi qu'une prédiction pour chaque capteur considéré et chaque position candidate. Plusieurs calculs de similarité peuvent donc être effectués, pour une position candidate et chaque capteur considéré.

Aussi, comme expliqué précédemment, le procédé comprend une étape d'attribution d'une pondération *m^{I}* à au moins un capteur *Capt^{I}* de la pluralité de capteurs, la pondération *m^{I}* tenant compte du rang *r^{I}* de similarité du au moins un capteur *Capt^{I}* parmi les mesures de similarité de la pluralité de capteurs.

Ainsi, selon ce mode de réalisation, on peut attribuer un score de fiabilité à chaque capteur, en fonction de son score de similarité relativement aux scores de similarité de tous les capteurs.

Par exemple, la pondération s'écrit selon la fonction « softmax » suivante : ${m}^{I} = m \times \frac{exp \left(-\frac{1}{{r}^{I}}\right)}{{\sum }_{k = 1}^{K} exp \left(-\frac{1}{{r}^{I}}\right)} , I = 1 .. K$

Selon un autre mode de réalisation, l'environnement connu présente une pluralité d'équipements associés chacun à au moins un capteur et le procédé d'estimation de localisation comprend les étapes suivantes, pour au moins un premier et un deuxième équipements :
- calcul d'au moins une prédiction de distance *p_{dist}* entre au moins une première localisation candidate préalablement sélectionnée dudit premier équipement et au moins une première localisation candidate préalablement sélectionnée dudit deuxième équipement ;
- mesure d'une distance *dist* entre lesdits premier et deuxième équipements ;
- pondération d'au moins ladite première localisation candidate d'au moins un desdits premier et deuxième équipements, en tenant compte de ladite prédiction de distance calculée *p_{dist}* et de ladite distance mesurée *dist* ;
- sélection, pour au moins un desdits premier et deuxième équipements, des *n* meilleures localisations candidates résultant de ladite pondération pour estimer ladite localisation courante *Lᵢ* dudit premier et/ou deuxième équipement, *n*<*N*.

Ainsi, selon ce mode de réalisation, lorsque plusieurs équipements (associés chacun à un ou plusieurs capteurs) sont présents dans un même environnement, le procédé de l'invention tire avantage de cette pluralité de sources d'informations potentiellement utiles pour affiner l'estimation de localisation de chacun des équipements.

En effet, le procédé de l'invention tient compte du fait que les équipements peuvent communiquer entre eux et peuvent donc potentiellement mesurer/déterminer la distance entre eux.

Cette distance mesurée/déterminée entre deux équipements peut être ensuite comparée à une prédiction de distance préalablement calculée entre une localisation candidate pour un premier équipement et une localisation candidate pour un deuxième équipement.

Cette comparaison permet ensuite de pondérer chaque localisation candidate prise en considération, afin de lui associer un score de fiabilité selon que la distance prédite entre deux localisations candidates est proche ou non de la distance effectivement mesurée entre les deux équipements considérés.

Enfin, ce score de fiabilité est utilisé pour sélectionner les n meilleures localisations candidates, pour chaque équipement considéré, afin d'affiner l'estimation de sa localisation courante.

De cette manière, le procédé de l'invention, mis en œuvre pour chaque équipement d'un environnement connu permet un raffinement mutuel des estimations de localisation « individuelles », via une étape de communication/dialogue entre les équipements.

Ce mode de réalisation permet ainsi de renforcer la fiabilité de l'estimation de localisation, dans un environnement multi-équipement et donc multi-capteur.

Selon une mise en œuvre particulière, l'estimation de localisation courante *Lᵢ* est basée sur une distribution de probabilités de présence *D*, et en ce que :
- lesdites localisations candidates correspondent à des échantillons d'une distribution de probabilités de présence *Dᵢ₋₁* pour ladite localisation précédente *Lᵢ₋₁* dudit équipement *Equip* ;
- lesdites meilleures localisations candidates résultant dudit calcul de similarité délivrent une distribution de probabilités de présence *Dᵢ* mise à jour.

Ainsi, la mise en œuvre de l'invention, selon ce mode de réalisation, consiste à modéliser l'estimation de localisation par une distribution de probabilités de présence, dont le nombre d'échantillons est augmenté grâce à l'hypothèse de mouvement de l'équipement.

En effet, plus le nombre de probabilités d'une distribution est grand et plus l'estimation basée sur cette distribution est optimisée, sans pour autant nécessiter de sources d'informations supplémentaires (par exemple via des capteurs supplémentaires ou des données de capteurs plus fréquentes).

La distribution de probabilités de présence est donc mise à jour après un calcul de similarité entre une donnée de capteur et une prédiction d'une donnée de capteur, pour une position candidate issue de la distribution. Par exemple, les *m* meilleures probabilités de présence (parmi les localisations candidates sélectionnées au départ) sont utilisées pour construire une distribution de probabilités mise à jour (avec par exemple *m=N*/*2, N* étant le nombre de probabilités sélectionnées à l'initialisation du procédé).

En particulier, la distribution de probabilités de présence *D* est représentée par une matrice de covariance *M*, et en ce que ladite distribution de probabilités de présence *Dᵢ* est mise à jour par calcul d'une matrice de covariance *Mᵢ* à partir des *m* meilleures localisations candidates *Cⱼ* résultant dudit calcul de similarité.

L'invention concerne également un module d'estimation d'une localisation *Lᵢ* d'au moins un équipement *Equip* associé à une pluralité de capteurs *Capt^{I},* dans un environnement connu, ledit module étant caractérisé en ce qu'il comprend :
- des moyens d'obtention d'une donnée ${s}_{i}^{I}$ dudit au moins un capteur *Capt^{I},* à ladite localisation courante à estimer *Lᵢ* ;
- des moyens de détermination d'une prédiction ${p}_{j}^{I}$ d'une donnée de capteur pour chacune des *N* localisations candidates *Cⱼ, j=*1 à *N*>1, préalablement sélectionnées par l'équipement *Equip,* ladite détermination tenant compte dudit environnement connu et d'un déplacement *mvᵢ* préalablement déterminé dudit équipement *Equip* à partir d'une localisation précédente *Lᵢ₋₁* ;
- des moyens de calcul d'une similarité ${S}_{j}^{I}$ entre ladite donnée de capteur ${s}_{i}^{I}$ et ladite prédiction ${p}_{j}^{I}$ pour chacune des *N* localisations candidates *Cⱼ, j=*1 *à N>*1 ; lesdits moyens d'obtention, de détermination, et de calcul étant mis en œuvre pour au moins deux capteurs de ladite pluralité de capteurs ; et
- des moyens d'attribution d'une pondération à au moins un capteur de ladite pluralité de capteurs, ladite pondération tenant compte du rang de similarité dudit au moins un capteur parmi les mesures de similarité de ladite pluralité de capteurs ;
- des moyens de sélection des *m* meilleures localisations candidates *Cⱼ* résultant dudit calcul de similarité pour estimer ladite localisation courante *Lᵢ, m<N,* ladite sélection tenant compte des *m^{I}* meilleures localisations candidates ${C}_{j}^{I}$ en fonction de ladite pondération pour lesdits au moins deux capteurs de ladite pluralité de capteurs, *m^{I}*<*N*.

L'invention concerne donc également un tel équipement comprenant ou étant rattaché à un module d'estimation d'une localisation tel que décrit précédemment.

L'invention concerne encore un produit programme d'ordinateur téléchargeable depuis un réseau de communication et/ou stocké sur un support lisible par ordinateur et/ou exécutable par un microprocesseur, comprenant des instructions de code de programme pour l'exécution d'un procédé tel que décrit précédemment, lorsqu'il est exécuté sur un ordinateur.

Enfin, l'invention concerne également un médium de stockage lisible par ordinateur et non transitoire, stockant un produit programme d'ordinateur comprenant des instructions pour l'exécution des étapes du procédé tel que décrit précédemment.

### 4 LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 et les figures 2a à 2d illustrent des étapes du procédé d'estimation selon un mode de réalisation de l'invention ;
- les figures 3 et 4 illustrent respectivement un exemple d'équipement multi-capteur et un exemple d'environnement multi-équipement ;
- les figures 5a à 5c illustrent des étapes du procédé d'estimation selon un autre mode de réalisation de l'invention ;
- les figures 6a et 6b illustrent un exemple d'architecture d'un module d'estimation mettant en œuvre les étapes du procédé d'estimation selon un mode de réalisation de l'invention.

### 5 DESCRIPTION DETAILLEE DE L'INVENTION

Sur toutes les figures du présent document, les éléments et étapes identiques sont désignés par une même référence.

Le principe général de l'invention repose à la fois sur :
- des hypothèses initiales pour estimer la localisation du ou des équipements, et
- des prédictions de localisation de cet ou ces équipements, après un déplacement du ou des équipements,
- une ou plusieurs données issues du ou des capteurs associés à cet ou ces équipements à localiser.

De plus, l'invention, selon ses différents modes de réalisation, se base sur des calculs de similarité entre ces données de capteurs et ces prédictions.

L'invention est donc indépendante du type de capteurs mais requiert l'existence d'une ou plusieurs métriques de similarité pour comparer des données de capteur(s) pouvant être de natures différentes et donc pouvant fournir des données a priori non comparables « directement ».

Par exemple, des mesures de similarité telles que celles décrites ci-après, non limitatives et listées à titre d'exemples illustratifs, peuvent être mises en œuvre dans les différents modes de réalisation de l'invention :
- la distance entre deux valeurs (par exemple sous la forme (x - y)², où x et y sont les valeurs à comparer) ;
- des algorithmes de partitionnement de données (ou « clustering » en anglais) regroupant des échantillons en « groupes » similaires : par exemple le partitionnement en k-moyennes (« k-means » en anglais), l'algorithme HDBSCAN (« Hierarchical Density-Based Spatial Clustering of Applications with Noise » en anglais), la recherche des plus proches voisins ... ;
- des algorithmes de classification qui répondent « oui/non » à la question de la similarité, ou fournissent une mesure de proximité entre deux échantillons, ou entre un échantillon et un groupe d'échantillons : par exemple des réseaux de neurones, les techniques SVM (pour « Support Vector Machine » en anglais), les techniques de régression... ;
- des mesures de similarité statistique qui estiment la similarité entre deux situations en tenant compte de la variabilité intrinsèque du problème : par exemple la divergence KL, les réseaux bayésiens ....

L'invention requiert également la connaissance de l'environnement (par exemple sous forme de carte(s) d'informations associées à plusieurs localisations) dans lequel l'équipement ou les équipements cherchent à se localiser, offrant ainsi la possibilité de prédire ou d'estimer ce qu'un capteur fournirait comme donnée dans une situation particulière (par exemple après un déplacement donné).

Par la suite, la connaissance de l'environnement peut notamment comprendre la connaissance des informations suivantes, non limitatives, listées à titre d'exemples illustratifs :
- la force, l'orientation et/ou l'atténuation de signaux à source fixe (par exemple Wifi^{®}, radio, GPS^{®}, GPS^{®} différentiel, GPRS^{®}/GSM^{®}, NFC^{®}, Bluetooth^{®}, ZigBee^{®}, Sigfox^{®}...) vis-à-vis de l'équipement. Ces informations peuvent dans une large mesure être prédites pour toutes les positions/localisations d'un environnement donné connu ;
- l'altimétrie, la barométrie et/ou la magnétométrie, dont les valeurs vis-à-vis d'une position/localisation donnée sont prévisibles ou stables ;
- la température, l'illumination et/ou l'intensité et/ou la fréquence de signaux sonores, qui peuvent être des signaux stables dans certains environnements contrôlés.

Selon un mode de réalisation, décrit ci-après, l'invention tire avantage de la présence de plusieurs sources de données de localisation (par exemple plusieurs capteurs associés à un équipement) pour fournir une précision et une fiabilité accrue, ainsi que pour identifier, le cas échéant, un capteur non fiable, et/ou, dans le cas de plusieurs équipements à localiser, un équipement non fiable.

Selon un autre mode de réalisation, également décrit ci-après, l'invention s'applique également à une configuration dans laquelle plusieurs équipements cherchent à se localiser eux-mêmes ou à localiser d'autres équipements. En effet, l'invention permet d'optimiser l'auto-localisation (ou « self-localisation ») et la localisation d'autres équipements, même si les équipements sont associés à des capteurs différents voire incompatibles.

### 5.1 Description d'un exemple de mise en oeuvre : un équipement associé à un capteur

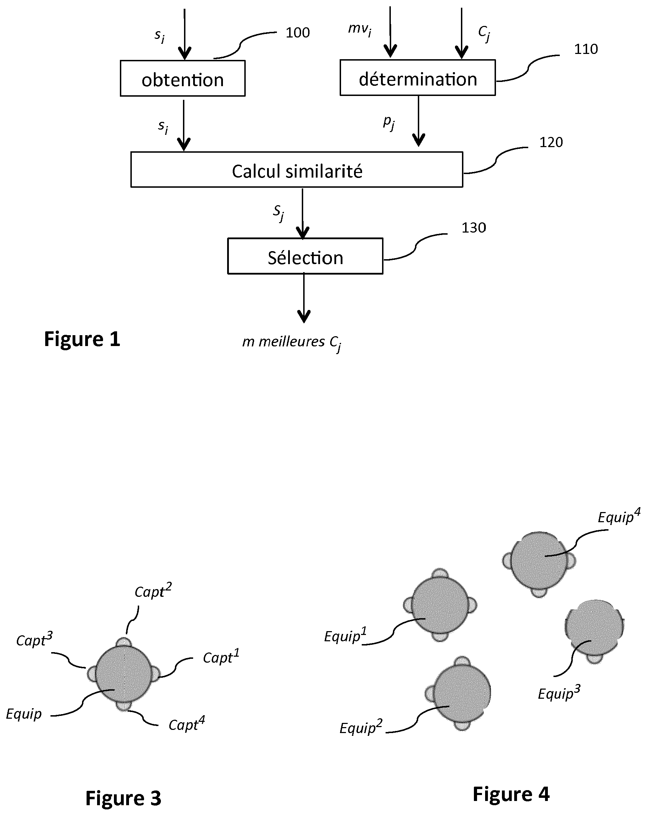

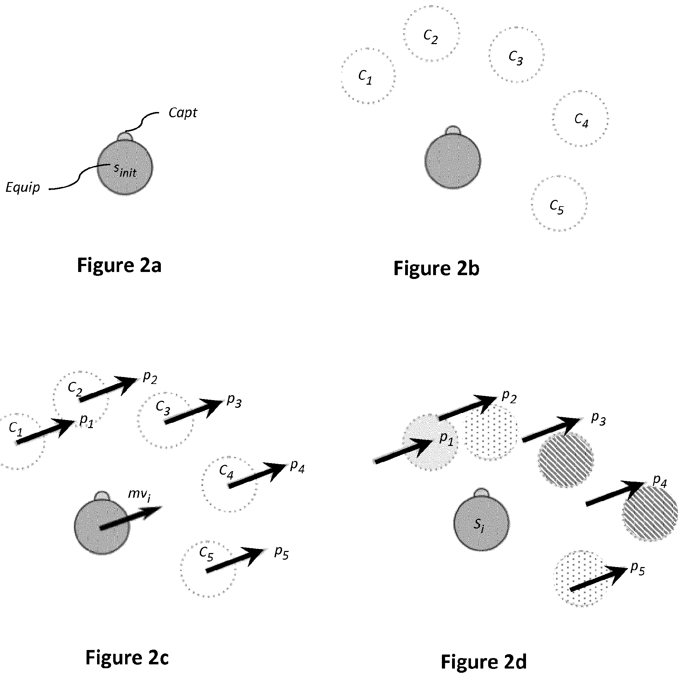

On décrit maintenant, en relation avec la figure 1 et les figures 2a à 2d, les principales étapes du procédé d'estimation de localisation d'un équipement, selon un exemple de mise en œuvre dans lequel un équipement *Equip* associé à un capteur *Capt* (tel qu'illustré en figure 2a) cherche à se localiser dans un environnement connu.

Dans un premier temps, on considère, pour estimer la localisation courante *Lᵢ* de l'équipement *Equip,* que ce dernier a préalablement sélectionné *N* localisations candidates *Cj* (avec *j=1* à *N*>*1*), correspondant à des positions possibles de cet équipement. Par exemple, au moment de l'initialisation du procédé d'estimation, ces localisations candidates peuvent être déterminées aléatoirement par l'équipement, ou sélectionnées en fonction d'une donnée de capteur déjà obtenue au moment de cette initialisation, et correspondant donc à la localisation initiale de l'équipement.

Le nombre *N* de localisations candidates peut être prédéterminé, par exemple en fonction de la nature du capteur, de l'environnement (sa taille, la quantité d'informations disponibles ...). Plus le nombre *N* de localisations candidates est grand et plus l'estimation est précise, mais nécessite un plus grand nombre de calculs. Le choix de *N* correspond donc à un compromis entre qualité/précision de l'estimation et performance du procédé, en terme de temps de calcul.

Ainsi, ces *N* localisations candidates vont permettre d'affiner l'estimation de localisation de l'équipement, au fur et à mesure des itérations des étapes suivantes du procédé.

L'équipement *Equip* obtient, lors d'une étape d'obtention 100, une donnée *sᵢ* du capteur *Capt* qui lui est associé, à la position où il se trouve et que l'on cherche à estimer (i.e. la localisation courante à estimer *Lᵢ*).

L'équipement *Equip* met également en œuvre une étape de détermination 110 d'une prédiction *pⱼ* d'une donnée de capteur pour chacune des *N* localisations candidates *Cⱼ* préalablement sélectionnées (tel que décrit ci-dessus).

Ces prédictions *pⱼ* tiennent compte :
- de l'environnement connu (par exemple d'une carte disponible sur laquelle figurent les valeurs du capteur, ou d'un ou plusieurs autres capteurs potentiels, à certaines positions, dont les localisations candidates choisies) et,
- d'un déplacement *mvᵢ* préalablement déterminé de l'équipement *Equip* à partir d'une localisation précédente *Lᵢ₋₁*.

Ainsi, l'équipement *Equip* est configuré pour déterminer la prédiction d'une donnée du capteur *Capt* qui lui est associé, pour chacune des localisations candidates préalablement sélectionnées auxquelles un déplacement prédéterminé a été ajouté. De cette manière, pour chaque localisation candidate préalablement sélectionnée, on obtient une localisation candidate « déplacée » pour laquelle l'équipement *Equip* détermine, à partir de sa connaissance de l'environnement, quelle serait la valeur du capteur (ou d'un ou plusieurs autres capteurs potentiels).

Le déplacement *mvᵢ* préalablement déterminé, appliqué à chaque localisation candidate, est celui réalisé par l'équipement à partir de la localisation correspondant à l'itération précédente, notée localisation précédente *Lᵢ₋₁*. Là encore, le déplacement *mvᵢ* peut être déterminé de manière aléatoire, et peut être conservé ou modifié à chaque itération du procédé de l'invention.

Selon une variante de réalisation, la détermination du déplacement (sa direction et sa longueur) peut être conditionnée par l'environnement, par exemple en fonction de certaines dimensions de l'environnement, ou bien du « quadrillage » ou maillage de cet environnement du point de vue des informations disponibles, de façon à pouvoir mieux prédire les valeurs de capteurs après déplacement.

Par exemple, si dix localisations candidates ont été sélectionnées pendant la phase d'initialisation du procédé, cette étape de détermination délivre donc dix prédictions de données de capteur.

Ces prédictions de données de capteur sont ensuite utilisées, lors d'une étape de calcul 120, pour calculer une similarité *Sⱼ* entre la donnée de capteur *sᵢ* et chacune des prédictions *pⱼ,* déterminées. Une pluralité de résultats de similarité est donc obtenue, en fonction du nombre de localisations candidates prises en considération.

De cette manière, l'équipement *Equip* peut connaître la fiabilité des localisations candidates et ensuite, lors d'une étape de sélection 130, ne conserver que les *m* meilleures localisations candidates *Cⱼ* résultant de ces calculs de similarité, pour estimer la localisation courante *Lᵢ,* avec *m<N.*

Selon ce premier mode de réalisation, ces étapes 100 à 130 sont mises en œuvre itérativement, de manière à affiner l'estimation de la localisation de l'équipement *Equip.*

Ainsi, à tout moment, il est possible d'obtenir une estimation de la localisation de l'équipement, cette estimation pouvant cependant être affinée à l'itération suivante du procédé.

Comme déjà indiqué ci-dessus, le procédé comprend également une phase préalable d'initialisation, dans laquelle les localisations candidates sont sélectionnées, une donnée *sᵢₙᵢₜ* de capteur à la position d'initialisation est obtenue et le déplacement *mvᵢₙᵢₜ* est déterminé.

La donnée initiale du capteur peut être utilisée pour la sélection des localisations candidates, et le déplacement déterminé initialement peut être utilisé pour chaque itération, ou déterminé à nouveau à chaque itération.

Les figures 2a à 2d illustrent un exemple de mise en œuvre de ce premier mode de réalisation, pour un équipement *Equip* associé à un capteur *Capt,* tel qu'illustré en figure 2a, par exemple au moment de la phase d'initialisation.

La figure 2b représente cet équipement (à une localisation non connue que l'on cherche à estimer) et cinq localisations candidates *C₁* à *C₅* sélectionnées pendant la phase d'initialisation, par exemple de manière aléatoire, ou en tenant compte d'une donnée *sᵢₙᵢₜ* du capteur *Capt.*

La figure 2c illustre le déplacement *mvᵢₙᵢₜ* (déterminé pendant la phase d'initialisation) appliqué d'une part à l'équipement lui-même, à partir de sa localisation initiale (non connue) et d'autre part aux cinq localisations candidates sélectionnées, le déplacement étant représenté par une flèche à partir du centre de chacune des localisations. De plus, les prédictions déterminées ensuite pour chaque localisation candidate, après déplacement, sont illustrées par les notations *p₁ à p₅.*

Enfin, la figure 2d illustre à la fois les flèches représentatives du déplacement *mvᵢₙᵢₜ,* pour les cinq localisations candidates *C₁* à *C₅* et leurs prédictions respectives *p₁* à *p₅*, après déplacement, ainsi qu'une représentation visuelle de la fiabilité de chaque prédiction associée à chaque localisation candidate, comme décrit ci-après.

En pratique, des mesures de similarité sont mises en œuvre pour chaque localisation candidate déplacée, à partir de la donnée *sᵢ* du capteur, pour l'équipement après déplacement. Pour des raisons de visualisation et d'illustration d'une mesure de similarité, les cercles présentant des motifs différents (grisé, pointillés ou hachurés) illustrent les localisations les plus proches des localisations candidates déplacées, pour lesquelles la donnée de capteur serait similaire (après mesure de similarité) de la donnée *sᵢ* du capteur, pour l'équipement après déplacement. Le motif du cercle est donc choisi dans cet exemple pour être représentatif de la fiabilité de la prédiction : le cercle autour de *p₁* est significatif d'une prédiction fiable, les cercles avec des pointillés (proches respectivement de *p₂* et *p₅* par exemple) sont significatifs d'une prédiction moyenne alors que les cercles avec des hachures (proches respectivement *p₃* et *p₄* par exemple) sont significatifs d'une prédiction peu fiable.

Par exemple, la localisation candidate *C₁* est considérée comme fiable parce que la prédiction *p₁* associée est relativement similaire à la donnée *sᵢ* du capteur, ce qui pourrait donc indiquer que la localisation réelle du capteur pourrait effectivement être estimée à partir de la localisation candidate *C₁* à laquelle le déplacement *mvᵢₙᵢₜ* est ajouté.

A contrario, la localisation candidate *C₄* est considérée comme peu fiable parce que la prédiction *p₄* associée est très différente de la donnée *sᵢ* du capteur, indiquant ainsi que cette localisation candidate *C₄* (à laquelle le déplacement *mvᵢₙᵢₜ* est ajouté) n'est probablement pas à considérer pour estimer la localisation réelle du capteur.

Les localisations candidates *C₂* et *C₅* peuvent quant à elles être considérées comme moyennement fiables, leurs prédictions respectives étant moyennement similaires à la donnée *sᵢ* du capteur.

Dans cet exemple, les localisations candidates *C₁, C₂* et *C₅* peuvent donc être choisies comme étant les *m* (avec *m*=3) meilleures localisations candidates pour l'itération suivante, affinant ainsi l'estimation de la position de l'équipement *Equip.*

### 5.2 Un équipement, plusieurs capteurs

On décrit maintenant, en relation avec la figure 1 et la figure 3, les principales étapes du procédé d'estimation de localisation d'un équipement *Equip* associé à plusieurs capteurs *Capt^{I}* (*Capt¹ à Capt⁴* ), tel qu'illustré en figure 3, cherche à se localiser dans un environnement connu.

Les étapes déjà décrites ci-dessus en relation avec la figure 1 et le premier mode de réalisation sont mises en œuvre de la même manière pour ce deuxième mode de réalisation, moyennant les différences suivantes :
- plusieurs données de capteurs étant potentiellement disponibles pour une localisation à estimer, les prédictions sont indexées par capteur et par localisation candidate : ${p}_{j}^{I}$ (avec *I* correspondant à l'indice du capteur et *j* correspondant à l'indice de la localisation candidate) ;
- de la même manière, des mesures de similarité sont calculées pour chaque capteur et chaque localisation candidate et s'écrivent donc ${S}_{j}^{I}$.

Ensuite, afin de tirer au mieux parti de cette pluralité de capteurs, l'invention prévoit, selon une variante de réalisation, de pondérer les contributions respectives de chaque capteur dans l'estimation de la localisation courante de l'équipement, de manière à optimiser encore cette estimation, en modifiant le nombre m de meilleures localisations sélectionnées pour chaque capteur.

Ainsi, on considère par exemple qu'à l'initialisation, *m^{I}*=*m*, c'est à dire que tous les capteurs sont considérés comme ayant une pondération identique. Cependant, il est possible de comparer la contribution de chaque capteur *Capt^{I}* dans le résultat final et donc de mesurer la fiabilité de chaque capteur. Cette information de fiabilité peut être utilisée ensuite pour améliorer l'estimation de localisation, en attribuant une pondération plus faible à un capteur moins fiable.

Par exemple, pour chaque capteur *Capt^{I},* on peut trouver le rang *r^{I}* de la meilleure prédiction parmi toutes les mesures de tous les capteurs et ainsi calculer la pondération à attribuer à chaque capteur.

Cette pondération peut par exemple s'écrire selon la fonction « softmax » suivante : ${m}^{I} = m \times \frac{exp \left(-\frac{1}{{r}^{I}}\right)}{{\sum }_{k = 1}^{K} exp \left(-\frac{1}{{r}^{I}}\right)} , i = 1 .. K$

Ensuite, les *m^{I}* meilleures localisations candidates sont choisies pour chaque capteur *Capt^{I},* de sorte que les *m* meilleures localisations candidates soient au final utilisées pour l'itération suivante.

### 5.3 Plusieurs équipements, plusieurs capteurs

On décrit maintenant, en relation avec les figures 1, 4 et 5a à 5c, les principales étapes du procédé d'estimation de localisation d'un équipement, selon un mode de réalisation dans lequel plusieurs équipements *Equip^{k}* associés chacun à un ou plusieurs capteurs, au moins un équipement étant associé à au moins deux capteurs, tel qu'illustrés en figure 4, cherchent à se localiser dans un environnement connu.

Sur cette figure 4, quatre équipements *Equip¹ à Equip⁴* sont associés respectivement à quatre capteurs, trois capteurs, un capteur et trois capteurs.

Les étapes déjà décrites ci-dessus en relation avec la figure 1 et les premier et/ou deuxième modes de réalisation sont mises en œuvre de la même manière pour ce deuxième mode de réalisation, pour chaque équipement.

De plus, lorsqu'une pluralité d'équipements présente plusieurs capteurs, ces équipements peuvent partager les informations relatives à leur propre localisation (par exemple l'estimation de la localisation courante obtenue à chaque itération du procédé décrit ci-dessus) ainsi que les mesures de fiabilité de leurs capteurs, via les pondérations *m^{I}* décrites ci-dessus.

De plus, si les équipements peuvent mesurer la distance entre eux (par exemple en utilisant un capteur ou une balise de type « beacon »), ils peuvent tirer profit de cette information pour reconstruire une carte de leurs positions relatives par triangulation.

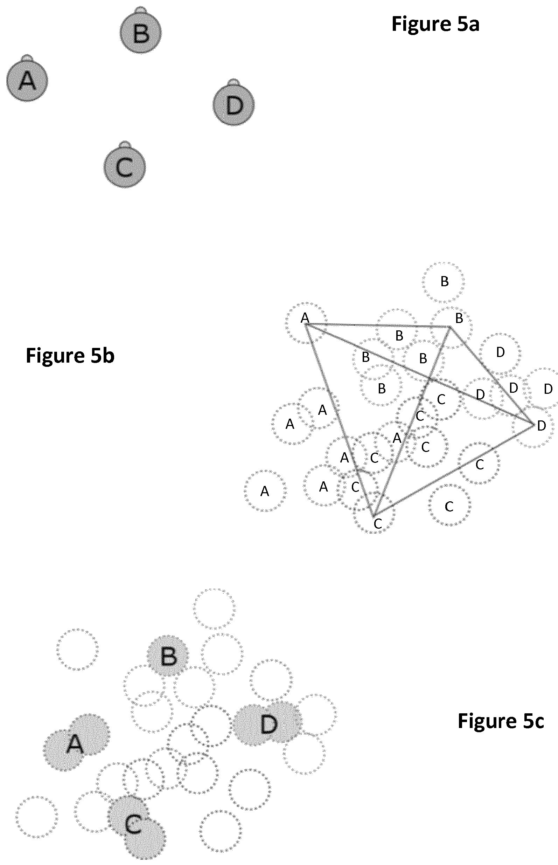

Ainsi, les différentes étapes du procédé, dans ce troisième mode de réalisation, sont les suivantes :
- étape 1 : obtention, pour chaque équipement, d'une estimation de sa localisation courante, selon le premier ou le deuxième mode de réalisation, l'estimation étant affinée à chaque itération du procédé ;
- étape 2 : détermination, pour chaque équipement, de prédictions de distance entre les estimations obtenues (décrit ci-après plus en détails en relation avec la figure 5b) lors de l'étape 1, puis communication, aux autres équipements, de ces prédictions de distance obtenues indépendamment pour chaque équipement ;
- étape 3 : mesure des distances entre les équipements (en communiquant entre eux par exemple), pour éliminer les hypothèses contradictoires, c'est-à-dire les estimations de localisation totalement incompatibles par exemple ;
- étape 4 : classement des estimations résultant de l'étape 1, selon la fiabilité de prédiction de la distance obtenue à l'étape 3 (résultat illustré par exemple en figure 5c par les cercles grisés pour chaque équipement) ;
- étape 5 : utilisation des estimations les mieux classées à l'étape 4 pour estimer la localisation courante de chaque équipement pour une itération suivante de l'étape 1 (selon le premier ou deuxième mode de réalisation décrit ci-dessus).

Comme pour le premier mode de réalisation, les étapes 1 à 5 ci-dessus décrites peuvent être itérées, de manière à affiner l'estimation de localisation de chaque équipement, en tenant compte des interactions possibles entre les différents équipements.

Les figures 5a à 5c illustrent un exemple de mise en œuvre de ce troisième mode de réalisation, pour quatre équipements A, B, C et D, associés respectivement à un ou plus capteurs (par exemple comme illustrés en figure 4).

La figure 5a présente donc les positions non connues respectives des quatre équipements A à D et la figure 5b les localisations candidates (illustrés par des cercles pointillées notées A à D) sélectionnées par exemple après une première itération du procédé selon le premier ou le deuxième mode de réalisation, pour chaque équipement A à D.

A partir de ces localisations candidates, des estimations respectives des distances inter-équipement sont déterminées (étape 2 décrite ci-dessus) par chaque équipement puis communiquées aux autres équipements. Des exemples de ces prédictions de distance sont illustrés par les traits continus reliant certaines localisations candidates (une localisation candidate de l'équipement A avec respectivement une localisation candidate des trois autres équipements B, C et D, une localisation candidate de l'équipement B avec une localisation candidate de l'équipement C et une localisation candidate de l'équipement D, et enfin une localisation candidate de l'équipement C avec une localisation candidate de l'équipement D).

Enfin, la figure 5c illustre un exemple de résultat de l'étape 5, tenant compte des mesures réelles des distance inter-équipement communiquées entre eux et délivrant deux meilleures localisations candidates pour l'équipement A, l'équipement C et l'équipement D et une meilleure localisation candidate pour l'équipement B.

Ces meilleures localisations candidates sélectionnées pour chaque équipement sont utilisées pour une itération suivante du procédé, d'abord individuellement pour chaque équipement (selon le premier ou deuxième mode de réalisation) dans l'étape 1 décrite ci-dessus, puis pour les étapes 2 à 5 décrites également ci-dessus.

De cette manière, l'estimation de localisation de chaque équipement peut être affiné, en interaction avec les procédés mis en œuvre dans chaque équipement.

### 5.4 Mise en œuvre particulière

Une mise en œuvre particulière du procédé d'estimation de localisation, selon les différents modes de réalisation décrits ci-dessus, consiste à modéliser l'estimation de la localisation d'un ou plusieurs équipements par une distribution de probabilités, notée distribution de probabilités de présence, dont le nombre d'échantillons peut être augmenté grâce à des hypothèses de déplacement du ou des équipements à localiser. Ainsi, l'estimation de localisation s'en trouve optimisée, au fur et à mesure de la mise à jour de la distribution de probabilités de présence (i.e. au fur et à mesure des hypothèses de déplacement).

Par exemple, cette distribution de probabilités de présence peut être approximée par une distribution Gaussienne, elle-même pouvant être représentée par une matrice de covariance *M.*

Selon cette mise en œuvre particulière, le procédé d'estimation d'une localisation consiste donc à mettre à jour une distribution de probabilités *D.* Ainsi, partant d'une distribution de probabilités de départ notée *D₀*, le procédé selon cette mise en œuvre de l'invention permet d'obtenir des distributions successives, *D₁, D₂* ... *Dₖ,* se rapprochant, au fur et à mesure des mises à jour, de la position réelle recherchée.

Si l'on se réfère au premier mode de réalisation décrit ci-dessus (pour un équipement à localiser, associé à un capteur), le procédé d'estimation d'une localisation comprend donc les étapes suivantes, selon cette mise en œuvre particulière :
- une phase d'initialisation, comprenant les étapes suivantes :
   ∘ tirage de *N* localisations candidates *Cⱼ* à partir de *D₀*;
   ∘ choix d'un déplacement *mvᵢₙᵢₜ* aléatoire ;
   ∘ obtention d'une donnée de capteur *sᵢₙᵢₜ* ;
- une étape de prédiction, pour chaque localisation candidate *Cⱼ,* de l'information de capteur qui pourrait être obtenue après un déplacement *mvᵢₙᵢₜ*, délivrant, pour chaque position candidate, une prédiction *pⱼ* (pouvant dépendre de *sᵢₙᵢₜ* comme déjà indiqué ci-dessus) ;
- une étape d'obtention d'une donnée de capteur *sᵢ* après déplacement *mvᵢₙᵢₜ* de l'équipement ;
- une phase de mise à jour de la distribution de probabilités comprenant les étapes suivantes :
   ∘ calcul des similarités *Sⱼ* entre la donnée de capteur *sᵢ* et la prédiction *pⱼ,* pour chaque localisation candidate *Cⱼ;*
   ∘ sélection des *m* meilleures localisations candidates et construction d'une nouvelle distribution de prédiction *Dᵢ* (par exemple en recalculant la matrice de covariance des échantillons).

Comme déjà décrit ci-dessus, les étapes de prédiction et d'obtention, ainsi que la phase de mise à jour peuvent être itérées, de façon à obtenir les distributions successives, *D₁, D₂* ... *Dₖ.*

Toutes les caractéristiques décrites ci-dessus en relation avec les premier, deuxième et troisième modes de réalisation peuvent bien sûr être appliquées à cette mise en œuvre particulière.

### 5.5 Autres caractéristiques et avantages

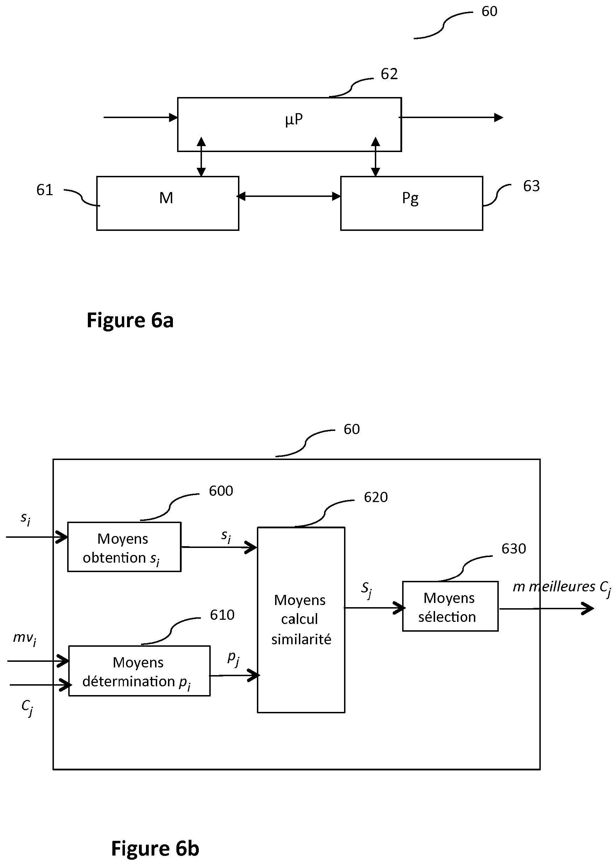

On décrit maintenant, en relation avec les figures 6a et 6b, un exemple de module 60 d'estimation d'une localisation d'au moins un équipement associé à au moins un capteur, dans un environnement connu, le module 60 comprenant des moyens d'exécution du procédé décrit ci-dessus.

Par exemple, comme illustré en figure 6a, le module 60 comprend une mémoire 61 constituée d'une mémoire tampon M, une unité de traitement 62, équipée par exemple d'un microprocesseur, et pilotée par le programme d'ordinateur 63, mettant en œuvre le procédé d'estimation d'une localisation décrit précédemment.

À l'initialisation, les instructions de code du programme d'ordinateur 63 sont par exemple chargées dans une mémoire avant d'être exécutées par le processeur de l'unité de traitement 62. L'unité de traitement 62 reçoit en entrée par exemple une donnée de capteur, un déplacement et un nombre de localisations candidates. Le microprocesseur de l'unité de traitement 62 met en œuvre les étapes du procédé d'estimation d'une localisation, selon les instructions du programme d'ordinateur 63, pour sélectionner les *m* meilleures localisations candidates.

Pour cela, le module 60 comprend, outre la mémoire tampon 61, et comme illustré en figure 6b, des moyens d'obtention 600 d'une donnée *sᵢ*, des moyens de détermination 610 d'une prédiction *pⱼ,* des moyens de calcul 620 d'une similarité *Sⱼ* entre la donnée de capteur *sᵢ* et la prédiction *pⱼ,* ainsi que des moyens de sélection 630 des m meilleures localisations candidates *Cⱼ.*

Ces différents moyens peuvent par exemple être mis en œuvre sous la forme d'un ou plusieurs modules.

L'invention telle que décrite ci-dessus selon ses différents modes de réalisation et mises en œuvre fournit donc une estimation de localisation optimale.

Dans un contexte multi-équipements, l'invention permet également de combiner des données de plusieurs équipements pour améliorer le résultat initial. En effet, l'invention exploite une pluralité de capteurs quand cela est possible et permet donc, notamment :
- de gérer des données de capteurs partielles, présentant des défauts et/ou bruitées tout en fournissant une estimation statistique optimale de la localisation (selon la mise en œuvre décrite ci-dessus) ;
- de gérer des sources de données arbitraires, à condition que leurs mesures puissent être comparées grâce à une ou plusieurs métriques de similarité et qu'il soit possible de prédire ou d'estimer ce que le capteur aurait mesuré dans une situation donnée ;
- de communiquer des informations de localisation à des équipements voisins, de manière à améliorer la précision de l'estimation de localisation des équipements.

De cette manière, des capteurs imprécis peuvent être plus facilement identifiés, ainsi que la raison de leur dysfonctionnement, tout en fournissant une expérience utilisateur plus lisse/douce, c'est-à-dire en évitant des erreurs grossières de localisation ou des situations où aucune localisation ne peut être fournie à l'utilisateur.

Parmi les applications possibles, au-delà de la localisation proprement dite d'un ou plusieurs équipements (c'est à dire trouver une position sur une carte), l'invention permet également, selon ses différents modes de réalisation, d'améliorer le suivi d'objets, comme par exemple les doigts sur un écran tactile ou les cartes NFC^{®} à proximité des capteurs.

## Revendications

1. Procédé d'estimation d'une localisation courante *Lᵢ* d'au moins un équipement *Equip* associé à une pluralité de capteurs *Capt^{I},* dans un environnement connu, ledit procédé étant **caractérisé en ce qu'**il est mis en œuvre dans au moins un module d'estimation compris ou rattaché audit au moins un équipement et **en ce qu'**il comprend au moins une itération *i* des étapes suivantes:
- pour au moins deux capteurs de ladite pluralité de capteurs :
• obtention (100) d'une donnée ${s}_{i}^{I}$ dudit au moins un capteur *Capt^{I},* à ladite localisation courante à estimer *Lᵢ* ;
• détermination (110) d'une prédiction ${p}_{j}^{I}$ d'une donnée de capteur pour chacune des *N* localisations candidates *Cⱼ, j=*1 à *N*>1, préalablement sélectionnées, ladite détermination tenant compte dudit environnement connu et d'un déplacement *mvᵢ* préalablement déterminé dudit équipement *Equip à* partir d'une localisation précédente *Lᵢ₋₁* ;
• calcul (120) d'une similarité ${S}_{j}^{I}$ entre ladite donnée de capteur ${s}_{i}^{I}$ et ladite prédiction ${p}_{j}^{I}$ pour chacune des *N* localisations candidates *Cⱼ, j=*1 *à N>*1 ;
- puis :
• attribution d'une pondération à au moins un capteur de ladite pluralité de capteurs, ladite pondération tenant compte du rang de similarité dudit au moins un capteur parmi les mesures de similarité de ladite pluralité de capteurs ;
• sélection (130) des *m* meilleures localisations candidates *Cⱼ* résultant dudit calcul de similarité pour estimer ladite localisation courante *Lᵢ, m<N,* ladite sélection tenant compte des *m^{I}* meilleures localisations candidates ${C}_{j}^{I}$ en fonction de ladite pondération pour lesdits au moins deux capteurs de ladite pluralité de capteurs, *m^{I}*<*N*, les *m* meilleures localisations candidates *Cⱼ* sélectionnées étant destinées à être utilisées à l'étape de détermination (110) d'une itération suivante.

2. Procédé d'estimation d'une localisation selon la revendication 1, **caractérisé en ce qu'**il comprend une phase d'initialisation préalable, comprenant les étapes suivantes :
• obtention d'une donnée ${s}_{init}^{I}$ dudit au moins un capteur *Capt^{I}* ;
• sélection de *Nᵢₙᵢₜ* localisations candidates *C₁ à C_{Ninit}* ;
• détermination d'un déplacement *mvᵢₙᵢₜ* dudit équipement *Equip.*

3. Procédé d'estimation d'une localisation selon la revendication 2, **caractérisé en ce que** ladite sélection est mise en œuvre de manière aléatoire ou tient compte de ladite donnée ${s}_{init}^{I}$*.*

4. Procédé d'estimation de localisation selon l'une quelconque des revendications 1 à 3, **caractérisé en ce que** ladite prédiction ${p}_{j}^{I}$ tient compte d'une donnée ${s}_{i - 1}^{I}$ dudit au moins un capteur *Capt^{I},* à ladite localisation précédente *Lᵢ₋₁*.

5. Procédé d'estimation d'une localisation selon l'une quelconque des revendications 1 à 4, **caractérisé en ce que** ladite estimation de localisation courante *Lᵢ* est basée sur une distribution de probabilités de présence *D*, et **en ce que** :
• lesdites localisations candidates correspondent à des échantillons d'une distribution de probabilités de présence *Dᵢ₋₁* pour ladite localisation précédente *Lᵢ₋₁* dudit équipement *Equip* ;
• lesdites meilleures localisations candidates résultant dudit calcul de similarité délivrent une distribution de probabilités de présence *Dᵢ* mise à jour.

6. Procédé d'estimation d'une localisation selon la revendication 5, **caractérisé en ce que** ladite distribution de probabilités de présence *D* est représentée par une matrice de covariance *M*, et **en ce que** ladite distribution de probabilités de présence *Dᵢ* est mise à jour par calcul d'une matrice de covariance *Mᵢ* à partir des *m* meilleures localisations candidates *Cⱼ* résultant dudit calcul de similarité.

7. Procédé d'estimation de localisation selon l'une quelconque des revendications 1 à 6, **caractérisé en ce que** ledit environnement connu présente une pluralité d'équipements associés chacun à au moins un capteur, au moins un équipement étant associé à au moins deux capteurs, et **en ce que** ledit procédé comprend les étapes suivantes, pour au moins un premier et un deuxième équipements :
• calcul d'au moins une prédiction de distance *p_{dist}* entre au moins une première localisation candidate préalablement sélectionnée dudit premier équipement et au moins une première localisation candidate préalablement sélectionnée dudit deuxième équipement ;
• mesure d'une distance *dist* entre lesdits premier et deuxième équipements ;
• pondération d'au moins ladite première localisation candidate d'au moins un desdits premier et deuxième équipements, en tenant compte de ladite prédiction de distance calculée *p_{dist}* et de ladite distance mesurée *dist* ;
• sélection, pour au moins un desdits premier et deuxième équipements, des *n* meilleures localisations candidates résultant de ladite pondération pour estimer ladite localisation courante *Lᵢ* dudit premier et/ou deuxième équipement, *n<N.*

8. Module d'estimation d'une localisation *Lᵢ* d'au moins un équipement *Equip* associé à une pluralité de capteurs *Capt^{I},* dans un environnement connu, ledit module étant **caractérisé en ce qu'**il comprend :
• des moyens d'obtention (600) d'une donnée ${s}_{i}^{I}$ dudit au moins un capteur *Capt^{I},* à ladite localisation courante à estimer *Lᵢ* ;
• des moyens de détermination (610) d'une prédiction ${p}_{j}^{I}$ d'une donnée de capteur pour chacune des *N* localisations candidates *Cⱼ, j=*1 à *N*>1, préalablement sélectionnées, ladite détermination tenant compte dudit environnement connu et d'un déplacement *mvᵢ* préalablement déterminé dudit équipement *Equip* à partir d'une localisation précédente *Lᵢ₋₁* ;
• des moyens de calcul (620) d'une similarité ${S}_{j}^{I}$ entre ladite donnée de capteur ${s}_{i}^{I}$ et ladite prédiction ${p}_{j}^{I}$ pour chacune des *N* localisations candidates *Cⱼ, j=*1 *à N>*1 ; lesdits moyens d'obtention, de détermination, et de calcul étant mis en œuvre pour au moins deux capteurs de ladite pluralité de capteurs ; et
• des moyens d'attribution d'une pondération à au moins un capteur de ladite pluralité de capteurs, ladite pondération tenant compte du rang de similarité dudit au moins un capteur parmi les mesures de similarité de ladite pluralité de capteurs ;
• des moyens de sélection (630) des *m* meilleures localisations candidates *Cⱼ* résultant dudit calcul de similarité pour estimer ladite localisation courante *Lᵢ, m<N,* ladite sélection tenant compte des *m^{I}* meilleures localisations candidates ${C}_{j}^{I}$ en fonction de ladite pondération pour lesdits au moins deux capteurs de ladite pluralité de capteurs, *m^{I}*<*N*.

9. Equipement comprenant un module d'estimation d'une localisation selon la revendication 8.

10. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé selon l'une quelconque des revendications 1 à 7, lorsqu'il est exécuté sur un ordinateur.

11. Médium de stockage lisible par ordinateur et non transitoire, stockant un produit programme d'ordinateur comprenant des instructions pour l'exécution des étapes du procédé selon l'une quelconque des revendications 1 à 7.

## Patentansprüche

1. Verfahren zur Schätzung einer gängigen Lokalisierung *Lᵢ* von mindestens einer Ausrüstung *Equip,* die einer Vielzahl von Sensoren *Capt^{I},* in einer bekannten Umgebung zugeordnet ist, wobei das Verfahren **dadurch gekennzeichnet ist, dass** es in mindestens einem Schätzmodul umgesetzt wird, das in der mindestens einen Ausrüstung umfasst ist oder damit verknüpft ist, und dadurch, dass es mindestens eine Iteration *i* der folgenden Schritte umfasst:
- für mindestens zwei Sensoren der Vielzahl von Sensoren:
• Erhalten (100) eines Datenwerts ${s}_{i}^{I}$ des mindestens einen Sensors *Capt^{I}* an der zu schätzenden aktuellen Lokalisierung *Lᵢ*;
• Bestimmen (110) einer Vorhersage eines ${p}_{j}^{I}$ Sensordatenwerts für jede der zuvor ausgewählten *N* Kandidatenlokalisierungen *Cⱼ, j* =1 bis *N* >1, wobei das Bestimmen die bekannte Umgebung und eine zuvor bestimmte Bewegung *mvᵢ* der Ausrüstung *Equip* ausgehend von einer vorherigen Lokalisierung *Lᵢ₋₁* berücksichtigt;
• Berechnen (120) einer Ähnlichkeit ${S}_{j}^{I}$ zwischen dem Sensordatenwert ${S}_{i}^{I}$ und der Vorhersage ${p}_{j}^{I}$ für jede der *N* Kandidatenlokalisierungen *Cⱼ, j* =1 bis *N* >1;
- danach:
• Zuweisen einer Gewichtung zu mindestens einem Sensor der Vielzahl von Sensoren, wobei die Gewichtung den Ähnlichkeitsrang des mindestens einen Sensors unter den Ähnlichkeitsmessungen der Vielzahl von Sensoren berücksichtigt;
• Auswählen (130) der *m* besten Kandidatenlokalisierungen *Cⱼ,* die sich aus der Ähnlichkeitsberechnung ergeben, um die aktuelle Lokalisierung *Lᵢ, m<N* zu schätzen, wobei die Auswahl die *m^{I}* besten Kandidatenlokalisierungen ${C}_{j}^{I}$ in Abhängigkeit von der Gewichtung für die mindestens zwei Sensoren der Vielzahl von Sensoren *m^{I} <N,* berücksichtigt, wobei die ausgewählten *m* besten Kandidatenlokalisierungen *Cⱼ* für die Verwendung im Bestimmungsschritt (110) einer folgenden Iteration bestimmt sind.

2. Verfahren zur Schätzung einer Lokalisierung nach Anspruch 1, **dadurch gekennzeichnet, dass** es eine Vorinitialisierungsphase umfasst, welche die folgenden Schritte umfasst:
• Erhalten eines Datenwerts ${s}_{init}^{I}$ des mindestens einen Sensors *Capt^{I}*;
• Auswählen von *Nᵢₙᵢₜ* Kandidatenlokalisierungen *C₁* bis *C_{Ninit}*;
• Bestimmen einer Bewegung *mvᵢₙᵢₜ* der Ausrüstung *Equip.*

3. Verfahren zur Schätzung einer Lokalisierung nach Anspruch 2, **dadurch gekennzeichnet, dass** die Auswahl zufällig umgesetzt wird oder den Datenwert ${s}_{init}^{I}$ berücksichtigt.

4. Verfahren zur Schätzung einer Lokalisierung nach einem der Ansprüche 1 bis 3, **dadurch gekennzeichnet, dass** die Vorhersage ${p}_{j}^{I}$ einen Datenwert ${s}_{i - 1}^{I}$ des mindestens einen Sensors *Capt^{I}* an der vorherigen Lokalisierung *Lᵢ₋₁* berücksichtigt.

5. Verfahren zur Schätzung einer Lokalisierung nach einem der Ansprüche 1 bis 4, **dadurch gekennzeichnet, dass** die Schätzung des aktuellen Lokalisierung *Lᵢ* auf einer Präsenzwahrscheinlichkeitsverteilung *D* basiert und dadurch, dass:
• die Kandidatenlokalisierungen Proben einer Verteilung der Präsenzwahrscheinlichkeitverteilung *Dᵢ₋₁* für die vorherige Lokalisierung *Lᵢ₋₁* der Ausrüstung *Equip* entsprechen;
• die besten Kandidatenlokalisierungen, die sich aus der Ähnlichkeitsberechnung ergeben, liefern eine aktualisierte Präsenzwahrscheinlichkeitsverteilung *Dᵢ* ergeben.

6. Verfahren zur Schätzung einer Lokalisierung nach Anspruch 5, **dadurch gekennzeichnet, dass** die Präsenzwahrscheinlichkeitsverteilung *D* durch eine Kovarianzmatrix *M* dargestellt ist, und dadurch, dass die Präsenzwahrscheinlichkeitsverteilung *Dᵢ* durch Berechnen einer Kovarianzmatrix *Mᵢ* aus den *m* besten Kandidatenlokalisierungen *Cⱼ* aktualisiert wird, die sich aus der Ähnlichkeitsberechnung ergeben.

7. Verfahren zur Schätzung einer Lokalisierung nach einem der Ansprüche 1 bis 6, **dadurch gekennzeichnet, dass** die bekannte Umgebung eine Vielzahl von Ausrüstungen aufweist, die jeweils mindestens einem Sensor zugeordnet sind, wobei mindestens eine Ausrüstung mindestens zwei Sensoren zugeordnet ist, und dadurch, dass das Verfahren die folgenden Schritte für mindestens eine erste und eine zweite Ausrüstung umfasst:
• Berechnen von mindestens einer Entfernungsvorhersage *p_{dist}* zwischen mindestens einer zuvor ausgewählten ersten Kandidatenlokalisierung der ersten Ausrüstung und mindestens einer zuvor ausgewählten ersten Kandidatenlokalisierung der zweiten Ausrüstung;
• Messen einer Entfernung *dist* zwischen der ersten und zweiten Ausrüstung;
• Gewichten mindestens der ersten Kandidatenlokalisierung mindestens einer der ersten und zweiten Ausrüstung, unter Berücksichtigung der berechneten Entfernungsvorhersage *p _{dist}* und der gemessenen Entfernung *dist;*
• Auswählen, für mindestens eine der ersten und zweiten Ausrüstung, der *n* besten Kandidatenlokalisierungen, die sich aus der Gewichtung ergeben, um die aktuelle Lokalisierung *Lᵢ* der ersten und/oder zweiten Ausrüstung zu schätzen, *n<N.*

8. Modul zur Schätzung einer Lokalisierung *Lᵢ* von mindestens einer Ausrüstung *Equip,* die mehreren Sensoren *Capt^{I}* in einer bekannten Umgebung zugeordnet ist, wobei das Modul **dadurch gekennzeichnet ist, dass** es umfasst:
• Mittel zum Erhalten (600) eines Datenwerts ${s}_{i}^{I}$ des mindestens einen Sensors *Capt^{I}* an der zu schätzenden aktuellen Lokalisierung *L*_{*i*;}
• Mittel zum Bestimmen (610) einer Vorhersage ${p}_{j}^{I}$ eines Sensordatenwerts für jeden der zuvor ausgewählten *N* Kandidatenlokalisierungen *Cⱼ, j =*1 bis *N*> 1, wobei das Bestimmen die bekannte Umgebung und eine zuvor bestimmte Bewegung *mvᵢ* der Ausrüstung *Equip* ausgehend von einer vorherigen Lokalisierung *Lᵢ₋₁* berücksichtigt;
• Mittel (620) zum Berechnen einer Ähnlichkeit ${S}_{j}^{I}$ zwischen dem Sensordatenwert ${s}_{i}^{I}$ und der Vorhersage ${p}_{j}^{I}$ für jede der *N* Kandidatenlokalisierungen *Cⱼ, j =*1 bis *N*> 1;
wobei die Mittel zum Erhalten, Bestimmen und Berechnen für mindestens zwei Sensoren der Vielzahl von Sensoren umgesetzt werden; und
• Mittel zum Zuweisen einer Gewichtung zu mindestens einen Sensor der Vielzahl von Sensoren, wobei die Gewichtung den Ähnlichkeitsrang des mindestens einen Sensors unter den Ähnlichkeitsmessungen der Vielzahl von Sensoren berücksichtigt;
• Mittel zum Auswählen (630) der m besten Kandidatenlokalisierungen *Cⱼ,* die sich aus der Ähnlichkeitsberechnung ergeben, um die aktuelle Lokalisierung *Lᵢ, m<N* zu schätzen, wobei die Auswahl die *m^{I}* besten Kandidatenlokalisierungen ${C}_{j}^{I}$ in Abhängigkeit von der Gewichtung für die mindestens zwei Sensoren der Vielzahl von Sensoren, *m^{I}*<*N*, berücksichtigt.

9. Ausrüstung, die ein Modul zur Schätzung einer Lokalisierung nach Anspruch 8 umfasst.

10. Computerprogrammprodukt, das aus einem Kommunikationsnetzwerk heruntergeladen und/oder auf einem computerlesbaren Träger gespeichert und/oder von einem Mikroprozessor ausgeführt werden kann, **dadurch gekennzeichnet, dass** es Programmcodeanweisungen zum Ausführen eines Verfahrens nach einem der Ansprüche 1 bis 7 umfasst, wenn es auf einem Computer ausgeführt wird.

11. Computerlesbares, nicht flüchtiges Speichermedium, das ein Computerprogrammprodukt speichert, das Anweisungen zur Ausführung der Schritte des Verfahrens nach einem der Ansprüche 1 bis 7 umfasst.

## Claims

1. A method for estimating a current location *Lᵢ* of at least one equipment *Equip* associated with a plurality of sensors *Capt^{I}*, in a known environment, said method being **characterized in that** it is implemented in at least one estimation module included in or attached to said at least one equipment and **in that** it comprises at least one iteration *i* of the following steps of:
- for at least two sensors of said plurality of sensors:
• obtaining (100) a data ${s}_{i}^{I}$ of said at least one sensor *Cape^{I},* at said current location *Lᵢ* to be estimated;
• determining (110) a prediction ${p}_{j}^{I}$ of a sensor data for each of the N candidate locations *Cⱼ, j =* 1 *to N >* 1, previously selected, said determination taking into account said known environment and a displacement *mvᵢ* previously determined of said equipment *Equip* from a previous location *L*_{*i*-1};
• calculating (120) a similarity ${S}_{j}^{I}$ between said sensor data ${s}_{i}^{I}$ and said prediction ${p}_{j}^{I}$ for each of the *N* candidate locations *Cⱼ, j =* 1 *to N >* 1;
- then:
• assigning a weighting to at least one sensor of said plurality of sensors, said weighting taking into account the similarity rank of said at least one sensor among the similarity measures of said plurality of sensors;
• selecting (130) the *m* best candidate locations *Cⱼ* resulting from said similarity calculation to estimate said current location *Lᵢ, m* < *N,* said selection taking into account the *m^{I}* best candidate locations ${C}_{j}^{I}$ according to said weighting for said at least two sensors of said plurality of sensors, *m^{I}* < *N,* the *m* best candidate locations *Cⱼ* selected being intended to be used in the determination step (110) of a subsequent iteration.

2. The method for estimating a location according to claim 1, **characterized in that** it comprises a preliminary initialization phase, comprising the following steps of:
• obtaining a data ${s}_{init}^{I}$ from said at least one sensor *Capt^{I};*
• selecting *Nᵢₙᵢₜ* candidate locations *C*₁ *to C_{Ninit}*;
• determining a displacement *mv_{inic}* of said equipment *Equip.*

3. The method for estimating a location according to claim 2, **characterized in that** said selection is implemented randomly or takes into account said data ${s}_{init}^{I}$*.*

4. The method for estimating a location according to any one of claims 1 to 3, **characterized in that** said prediction ${p}_{j}^{I}$ takes into account a data ${s}_{i - 1}^{I}$ from said at least one sensor *Capt^{I},* at said previous location *L*_{*i-*1}.

5. The method for estimating a location according to any one of claims 1 to 4, **characterized in that** said estimation of the current location *Lᵢ* is based on a probability distribution of presence *D*, and **in that**:
• said candidate locations correspond to samples of a probability distribution of presence *Dᵢ₋₁* for said previous location *L*_{*i*-1} of said equipment *Equip;*
• said best candidate locations resulting from said similarity calculation yield an updated probability distribution of presence *Dᵢ*.

6. The method for estimating a location according to claim 5, **characterized in that** said probability distribution of presence *D* is represented by a covariance matrix *M,* and **in that** said probability distribution of presence *Dᵢ* is updated by calculating a covariance matrix *Mᵢ* from the *m* best candidate locations *Cⱼ* resulting from said similarity calculation.

7. The method for estimating a location according to any one of claims 1 to 6, **characterized in that** said known environment have a plurality of equipment, each associated with at least one sensor, at least one equipment being associated with at least two sensors, and **in that** said method comprises the following steps, for at least first and second equipment, of:
• calculating at least one distance prediction *p_{dist}* between at least one previously selected first candidate location of said first equipment and at least one previously selected first candidate location of said second equipment;
• measuring a distance *dist* between said first and second equipment;
• weighting at least said first candidate location of at least one of said first and second equipment, taking into account said calculated distance prediction *p_{dist}* and said measured distance *dist*;
• selecting, for at least one of said first and second equipment, the *n* best candidate locations resulting from said weighting to estimate said current location *Lᵢ* of said first and/or second equipment, *n < N.*

8. A module for estimating a location *Lᵢ* of at least one equipment *Equip* associated with a plurality of sensors *Capt^{I},* in a known environment, said module being **characterized in that** it comprises:
• means (600) for obtaining a data ${s}_{i}^{I}$ from said at least one sensor *Capt^{I}* at said current location *Lᵢ* to be estimated;
• means (610) for determining a prediction ${p}_{j}^{I}$ of a sensor data for each of the *N* candidate locations *Cⱼ, j =* 1 *to N >* 1, previously selected, said determination taking into account said known environment and a displacement *mvᵢ* previously determined of said equipment *Equip* from a previous location *L*_{*i*-1};
• means (620) for calculating a similarity ${S}_{j}^{I}$ between said sensor data ${s}_{i}^{I}$ and said prediction ${p}_{j}^{I}$ for each of the *N* candidate locations *Cⱼ, j=1* to *N >* 1;
said means for obtaining, determining, and calculating being implemented for at least two sensors of said plurality of sensors; and
• means for assigning a weighting to at least one sensor of said plurality of sensors, said weighting taking into account the similarity rank of said at least one sensor among the similarity measures of said plurality of sensors;
• means (630) for selecting the *m* best candidate locations *Cⱼ* resulting from said similarity calculation to estimate said current location *Lᵢ, m* < *N,* said selection taking into account the *m^{I}* best candidate locations ${C}_{j}^{I}$ according to said weighting for said at least two sensors of said plurality of sensors, *m^{I} < N.*

9. An equipment comprising a module for estimating a location according to claim 8.

10. A computer program product downloadable from a communication network and/or stored on a computer-readable medium and/or executable by a microprocessor, **characterized in that** it comprises program code instructions for executing a method according to any one of claims 1 to 7, when executed on a computer.

11. A non-transitory computer-readable storage medium, storing a computer program product comprising instructions for executing the steps of the method according to any one of claims 1 to 7.
